# FASCICULE DE BREVET EUROPEEN

(11) **EP 0 742 236 B1**
(45) Date de publication et mention de la délivrance du brevet: **02.01.2002**
(21) Numéro de dépôt: 96400860.1
(22) Date de dépôt: 23.04.1996
(51) Int. Cl.: C08F 255/02, C08L 51/06, B32B 7/12, B32B 1/02

(54) **Liant de coextrusion à base de polyoléfines greffées**
Koextrusionsbindemittel aus gepfropften Polyolefinen
Coextrusion binder based on grafted polyolefins

(30) Priorité: 09.05.1995 FR 9505472; 02.06.1995 FR 9506575
(43) Date de publication de la demande: 13.11.1996
(73) Titulaire: Atofina, 92800 Puteaux (FR)
(72) Inventeur: Beuzelin, Catherine, 64000 Pau (FR); Hert, Marius, 27470 Serquigny (FR); Jammet, Jean-Claude, 27190 Glisolles (FR); Trolez, Yves, 69190 Saint-Fons (FR)
(74) Mandataire: Neel, Henry

(56) Documents cités:
- EP-A- 0 035 392
- EP-A- 0 587 005
- US-A- 4 762 890
- US-A- 5 346 963

## Description

La présente invention concerne un liant de coextrusion à base de polyoléfines greffées, et plus particulièrement, un liant présentant à la fois une viscosité compatible avec la transformation, qui comprend le recyclage d'environ 40 % de la quantité de matière initiale et une dépendance de la viscosité vis-à-vis des vitesses d'élongation et de cisaillement la plus faible possible. Ce liant est utile pour fabriquer des objets multicouches tels que par exemple des réservoirs notamment d'essence pour les automobiles.

L'invention fournit un liant comprenant :
- un mélange (A) d'au moins un polyéthylène haute densité (A1) et d'au moins un polymère (A2) choisi parmi:
   - les élastomères éthylène / propylène (EPR) ou éthylène / propylène / diène (EPDM)
   - les polyéthylènes de très basse densité (VLDPE) qui sont des homopolymères de l'éthylène ou des copolymères de l'éthylène et d'une alphaoléfine
   - les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, le mélange de (A1) et (A2) étant cogreffé par un monomère choisi parmi un acide ou un anhydride d'acide carboxylique insaturé ou leurs dérivés,
- éventuellement (ii) un autre mélange (A') des polymères (A'1) et (A'2) cogreffés et/ou un polymère (B),
- le liant ayant un rapport MI₁₀/ MI₂ supérieur à 18,5 ; MI₁₀ désignant l'indice d'écoulement à 190°C sous une charge de 10 kg et MI₂ l'indice sous une charge de 2,16 kg.

Les réservoirs d'essence sont constitués le plus souvent de cinq couches qui sont respectivement :
- du polyéthylène haute densité (PEHD) ;
- un liant ;
- un polyamide (PA) ou un copolymère ayant des motifs éthylène et des motifs alcool vinylique (EVOH) ;
- un liant ;
- du PEHD.

Très souvent, on ajoute une sixième couche entre l'une des couches de liant et l'une des couches de PEHD. Cette sixième couche est constituée des chutes de fabrication consécutives au moulage des réservoirs, de réservoirs non conformes pour une beaucoup plus petite quantité. Ces chutes et réservoirs non conformes sont broyés jusqu'à obtenir des granulés. Ce broyat est ensuite refondu et extrudé directement sur l'installation de coextrusion des réservoirs. Ce broyat pourrait être aussi fondu et regranulé par une machine d'extrusion telle qu'une bi-vis avant d'être réutilisé.

Selon une variante, le produit recyclé peut être mélangé au PEHD des deux couches extrêmes du réservoir. On peut par exemple mélanger les granulés de produit recyclé aux granulés de PEHD vierge de ces deux couches. On peut aussi utiliser toute combinaison de ces recyclages.

Le taux de matière recyclée peut représenter jusqu'à 50 % du poids total du réservoir.

Cette sixième couche comporte donc l'ensemble des matériaux de la structure multicouches, PEHD, liants, PA ou EVOH. La demanderesse a découvert que le liant de l'invention joue le rôle de compatibilisant entre le produit barrière (PA ou EVOH) et le PEHD, mais aussi d'additif choc, voire inhibiteur de résidus catalytiques qui dégradent l'EVOH. Il est de même quand le produit recyclé est mélangé aux PEHD des couches extrêmes.

La demanderesse a aussi découvert que le liant de l'invention a une viscosité du même niveau que celle du PEHD utilisé pour le réservoir.

La demanderesse a aussi découvert que la paraison a une bonne tenue lors de l'extrusion soufflage pour fabriquer le réservoir, on observe aussi une bonne résistance des lignes de ressoudure de fond et du haut du réservoir. En effet, le liant est peu sensible à la vitesse d'élongation, ce qui permet de conserver une épaisseur suffisante au niveau de la ligne de ressoudure, ceci garantissant une bonne adhésion en cet endroit critique.

Un autre avantage du liant de l'invention est le point de fusion pouvant atteindre 125 à 135° C (mesurée par DSC), ce qui permet de limiter l'effet "pincement" par une rapide montée en viscosité.

L'art antérieur a déjà décrit des liants à base de polyoléfines greffées.

US 4 058 647 décrit des polyoléfines greffées qu'on mélange avec des caoutchoucs ayant une viscosité Mooney entre 40 et 150 pour faire des liants. La polyoléfine peut être un PEHD, un copolymère éthylène-butène, éthylène-héxène ou du polypropylène. Le caoutchouc peut être un EPR, un EPDM, ou un NBR (nitrile-butadiène).

Les exemples ne montrent que des bicouches liant */* EVOH ou liant */* PET (polyéthylène téréphtalate) préparés par pressage de films à chaud sous 40 kg/cm² de pression.

Ces liants ne conviennent pas pour faire des réservoirs par extrusion soufflage.

EP 035 392 décrit un produit multicouche laminé composé de (A) une couche comprenant une résine éthylénique modifiée par greffage provenant d'un polymère éthylénique qui contient éventuellement un comonomère d'alpha-oléfine et qui est greffée avec un acide carboxylique insaturé ou avec un dérivé fonctionnel de cet acide, et (B) une couche de résine polaire contenant de l'oxygène ou de l'azote ou une couche métallique en contact avec la couche (A), la couche (A) comprenant éventuellement un comonomère d'alpha-oléfine, caractérisé par le fait que
(1) la couche (A) est constituée par
   (i) 1 à 100 % en poids d'une résine éthylénique modifiée par greffage provenant d'un polymère éthylénique qui contient 0 à 15 % en mole d'au moins une alpha-oléfine ayant 3 à 30 atomes de carbone, comme comonomère, et qui a un rapport MI₂/[µ]^{-8,77} qui n'est pas inférieur à 15 et une densité de 0,88 à 0,98 g/cm³ et,
   (ii) 99 à 0 % en poids d'un polymère éthylénique non modifié contenant 0 à 50 % en mole d'au moins une alpha-oléfine ayant 3 à 30 atomes de carbone, comme comonomère, et qui a un rapport MI₂/[µ] ^{-8,77} qui n'est pas inférieur à 15 et une densité de 0,86 à 0,96 g/cm³, et que
(2) la couche (A) a
   (a) une teneur en éthylène qui n'est pas inférieure à 80 % en mole
   (b) une teneur en acide carboxylique ou en son dérivé, de 0,01 à 10 % en poids rapportée au poids de la couche (A),
   (c) une densité de 0,88 à 0,98 g/cm³, et
   (d) un rapport MI₁₀ / MI₂ de 5 à 18, où MI₂ est l'indice d'écoulement en masse fondue à 190° C sous une charge de 2,16 kg, MI₁₀ est l'indice d'écoulement en masse fondue à 190° C sous une charge de 10 kg et [µ] est la viscosité intrinsèque (dl/g) d'un polymère mesuré à 135° C sur une solution dans la décaline.

Ce produit peut convenir pour de petits récipients tels que des bouteilles mais pas pour des réservoirs extrudés soufflés.

Le PEHD (A1) est un produit connu en soi.

Le polymère (A2) est choisi dans le groupe comprenant:
un élastomère éthylène / propylène (EPR) ou éthylène / propylène / diène (EPDM);
un polyéthylène de très basse densité (VLDPE) qui est soit un homopolymère de l'éthylène, soit un copolymère de l'éthylène et d'une alpha oléfine;
un copolymère de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides.

Avantageusement, (A2) est choisi parmi l'EPR, le VLDPE, les copolymères éthylène / (méth)acrylate d'alkyle ou les copolymères éthylène / (méth)acrylate d'alkyle / anhydride maléique.

Les monomères de greffage sont choisis notamment parmi l'acide (méth)acrylique, l'acide maléique, l'acide fumarique, l'acide itaconique, l'acide crotonique, l'anhydride itaconique, l'anhydride maléique ou un anhydride maléique substitué, comme l'anhydride diméthyl maléique, ou encore un sel, amide, imide et ester d'un acide carboxylique à insaturation éthylénique, comme le maléate mono-et disodique, l'acrylamide, le maléimide et le fumarate de diéthyle. L'anhydride maléique et l'acide maléique sont préférés.

Le greffage peut être effectué par une méthode connue consistant à faire fondre le mélange de polymères (A1) et (A2) à greffer, à y ajouter du monomère de greffage et de 50 à 20 000 ppm, par rapport au(x) polymère(s), d'un initiateur de polymérisation radicalaire, à mélanger de façon à obtenir une distribution uniforme du monomère de greffage et de l'initiateur dans le mélange de (A1) et (A2) polymères, à malaxer le mélange résultant dans une extrudeuse à une température supérieure au point de fusion des polymères, à extruder le polymère greffé résultant en un article façonné, en pastilles ou autres formes qui sont ensuite utilisées telles quelles ou en mélange avec d'autres polymères, en vue de la coextrusion de structures à couches multiples, comme cela sera décrit ci-après.

En dehors de ce greffage en extrudeuse, on peut également citer, comme autre méthode possible, le greffage en solution consistant à dissoudre les polymères à greffer dans un solvant, et à y ajouter le ou les monomères de greffage et l'initiateur pour effectuer la polymérisation par greffage, à une température comprise entre 80 et 150° C.

L'initiateur des radicaux libres peut appartenir à différentes familles bien connues de l'homme de métier. Parmi elles, on peut citer les peroxydes, les peresters, les hydroperoxydes et les composés diazoïques. Comme peroxyde, on peut citer le peroxyde de dicumyle, le peroxyde de ditertiobutyle, le peroxyde de benzoyle, le peroxyde de lauroyle, l'α,α'-bis (t-butylperoxy-m-isopropyl)benzène, le 2,5-diméthyl-2,5-di-(t-butylperoxy)hexane, le 2,5-diméthyl-2,5-di(t-butylperoxy)-3-hexyne. Comme perester, on peut citer le perbenzoate de butyle tertiaire ; comme hydroperoxyde, l'hydroperoxyde de t-butyle et l'hydroperoxyde de cumène, et comme composé diazoïque, l'azobisisobutyronitrile.

La quantité de monomère greffé peut varier dans de larges limites, elle peut atteindre 10 parties pour 100 parties du mélange de (A1) et (A2). Avantageusement, des valeurs de 1 000 à 8 000 ppm sont suffisantes et produisent une adhésion suffisante.

Avantageusement, le rapport MI₁₀/MI₂ du mélange (A) des polymères (A1) et (A2) cogreffés n'est pas supérieur à 35 et de préférence est compris entre 22 et 33.

Avantageusement, le MI₂₀ du mélange (A) des polymères (A1) et (A2) cogreffés est inférieur à 24. MI₂₀ désigne l'indice d'écoulement à 190° C sous une charge de 21,6 kg.

On peut choisir le PEHD (A1) parmi les PEHD tels que le rapport 1/LOG (MI₂₀ / MI₂) est supérieur à 0,6.

On utilise, pour des raisons pratiques, un liant coloré. Ceci permet de mieux mesurer l'épaisseur des couches de liant et du produit barrière (PA ou EVOH).

On a donc coloré notre liant sans altération des autres propriétés. Il est recommandé d'augmenter la quantité de monomère greffé car le colorant peut en inhiber une partie.

On ne sortirait pas du cadre de l'invention si le liant était constitué d'un mélange (A') et d'un mélange (A"), chacun respectant les caractéristiques de l'invention. On ne sortirait pas du cadre de l'invention si le mélange (A') constitué des polymères A'₁ et A'₂ cogreffés ne satisfait pas la valeur du rapport MI₁₀ / MI₂. Le mélange (A") pouvant dans ce cas satisfaire ou non la valeur dudit rapport.

On ne sortirait pas du cadre de l'invention si le liant de l'invention comprend, en plus du mélange (A), un autre polymère (B) pourvu que le liant ait un rapport MI₁₀ / MI₂ conforme à l'invention.

On ne sortirait pas du cadre de l'invention si le liant est constitué d'un mélange (A) ayant un rapport MI₁₀ / MI₂ en dehors de l'invention pourvu que son mélange avec (B) ait ce dit rapport conforme à l'invention.

La présente invention concerne aussi un matériau multicouche comprenant au moins deux couches, le liant de la présente invention étant disposé entre elles. Ces deux couches peuvent être identiques ou différentes et choisies parmi les métaux ou les polymères.

A titre d'exemples, on peut citer les matériaux suivants :
PEHD / liant */* EVOH et PEHD */* liant */* PA.

Ces matériaux peuvent être des tubes, des plaques, ou des corps creux. On peut les préparer par coextrusion, couchage ou coextrusion soufflage.

La présente invention concerne aussi des réservoirs notamment d'essence tels que décrits plus haut.

La demanderesse a découvert que ces réservoirs ont une très bonne résistance au vieillissement dans les essences. De plus, ces réservoirs, à 5 ou 6 couches, passent le test de chute à 6 m et - 40° C, remplis d'un mélange eau-glycol à 8 bars. On n'observe aucune fissuration.

### Exemples

On a utilisé les produits suivants :
**Liant 1** selon l'invention : PEHD 75 parties, EPR (VISTALON® PE 808) 25 parties cogreffés par l'anhydride maléique (MAH). La quantité de MAH greffée est de 5 000 ppm. Le PEHD a un MI₂ = 0,9, un Ml 20 = 26 et un rapport 1/LOG (MI₂₀/MI₂) = 0,68.
   MI₂₀ = 18
   MI₁₀/MI₂=22,5
   Température de fusion par DSC : 129° C.
**Liant 2** selon l'exemple 1 de EP 35392, il a un MI₂ de 43.

### Essais de coextrusion

• au laboratoire :

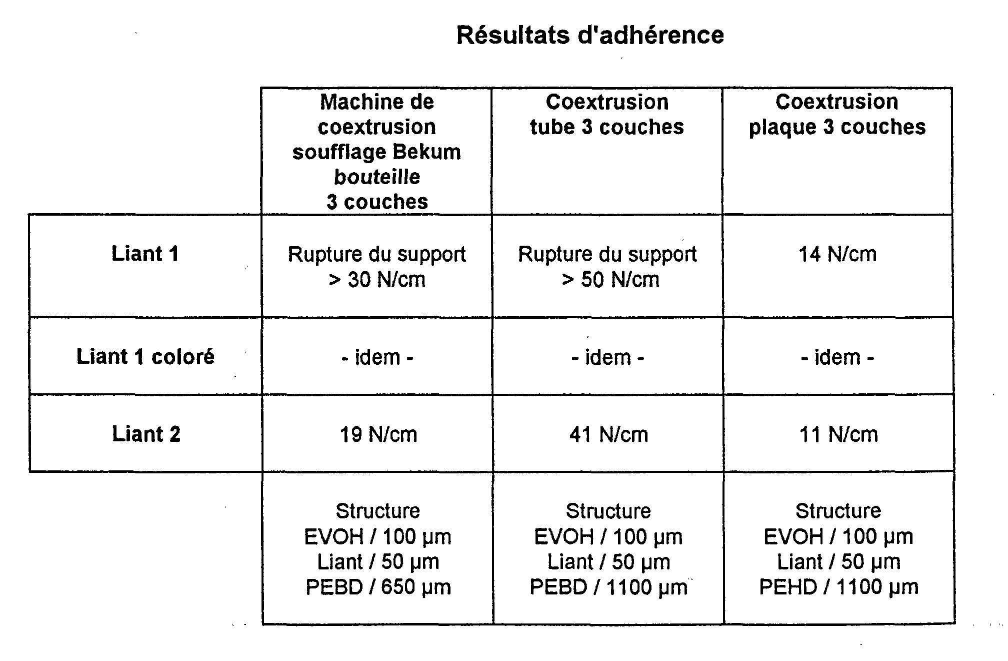

• industriel
Sur machine KRUPP KAUTEX®

• Réservoir 6 couches : liant, on utilise le Liant 1 pour un réservoir et le Liant 2 pour un autre réservoir.

| | | | | | |
|---|---|---|---|---|---|
| PEHD | Liant | EVOH | Liant | Recyclé | PEHD |
| - 2,4 mm | 100 µm | 100 µm | 100 µm | 2,8 mm | 1 mm |

Liant 1 : Force d'adhérence : 150 N/cm
Liant 2 : Force d'adhérence : 70 N/cm
• Excellente résistance au vieillissement dans les essences :
à 60° C pendant un mois dans l'essence CM15 (gasoline-méthanol mixtures for material testing, SAE cooperative research report Sept. 1990) et dans l'essence TF-1 (Specification for a gazoline ethanol fuel blend for vehicule material compatibility testing, Tech center Fuel and lubrication).

Il n'y a pas de variation de la force de pelage.

On observe aussi une excellente morphologie (fine et régulière) de la couche de recyclé.

### Recyclage

Une étude de "recyclage" où l'on mélange les 3 constituants de base du réservoir essence :
PEHD (BASF 4261)
EVOH (Soarnol® DT 29.03)
Liant 1
à des taux correspondants au recyclage du réservoir à essence, à savoir, couche de recyclé de 40 %. Il s'agit du PEHD des couches du réservoir et non pas de celui utilisé pour le liant.

Compositions étudiées :

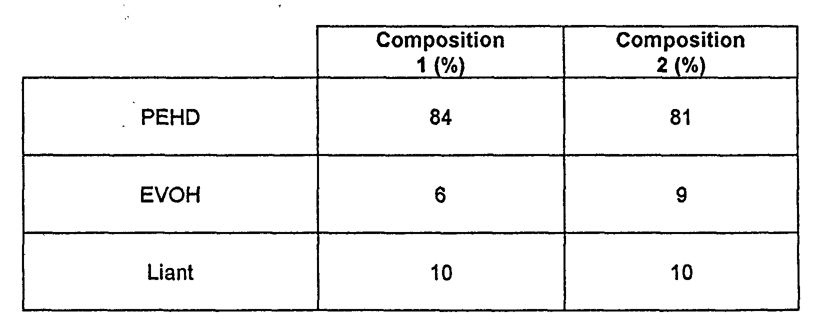

Ces compositions couvrent le domaine de composition de la couche de recyclé après plusieurs générations de recyclage.

Nous montrons, grâce aux résultats de Ml à 190° C 21,6 kg, pourquoi le recyclage n'affecte pas la tenue de la paraison et les conditions d'extrusion.

| **Mi PEHD BASF pur** | **Mi Composition 1** | **Mi Composition 2** |
|---|---|---|
| 5,5 | 4,8 | 4 |

Notre liant permet de retrouver un Ml proche de celui du produit de base.

On soulignera que si l'on ne met que 5 % de liant, soit une composition :

| | |
|---|---|
| 89 % PEHD | On trouve : |
| 6 % EVOH | MI = 10 |
| 5 % Liant | |

et une composition :

| | |
|---|---|
| 86 % PEHD | On trouve : |
| 9 % EVOH | MI = 7 |
| 5 % Liant | |

Ces deux produits sont trop fluides pour une bonne tenue de paraison et une bonne extrusion.

*Note* : Les mélanges ont été effectués sur une monovis de marque FAIREX® de Ø 45 mm et L/D = 26, à partir de granulés de chaque produit.

La vis comporte deux éléments malaxeurs assurant une bonne homogénéité du mélange.

## Revendications

1. Liant comprenant :
• un mélange (A) d'au moins un polyéthylène haute densité (A1) et d'au moins un polymère (A2) choisi parmi :
- les élastomères éthylène / propylène (EPR) ou éthylène / propylène / diène (EPDM)
- les polyéthylènes de très basse densité (VLDPE) qui sont des homopolymères de l'éthylène ou des copolymères de l'éthylène et d'une alphaoléfine
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides, le mélange de (A1) et (A2) étant cogreffé par un monomère choisi parmi un acide ou un anhydride d'acide carboxylique insaturé ou leurs dérivés,
• éventuellement (ii) un autre mélange (A') des polymères (A'1) et (A'2) cogreffés et/ou un polymère (B),
• le liant ayant un rapport MI₁₀/ MI₂ supérieur à 18,5 ; MI₁₀ désignant l'indice d'écoulement à 190°C sous une charge de 10 kg et MI₂ l'indice sous une charge de 2,16 kg.

2. Liant selon la revendication 1 dans lequel le rapport MI₁₀ / MI₂ est inférieur ou égal à 35.

3. Liant selon l'une quelconque des revendications précécentes dans lequel le MI₂₀ du mélange (A) des polymères (A1) et (A2) cogreffés est inférieur à 24, MI₂₀ désignant l'indice d'écoulement à 190° C sous une charge de 21,6 kg.

4. Matériau multicouches comprenant au moins deux couches, le liant des revendications 1 à 3 étant disposé entre elles.

5. Réservoir comprenant cinq couches qui sont respectivement :
- du PEHD
- le liant des revendications 1 à 3
- un PA ou un EVOH
- le liant des revendications 1 à 3
- du PEHD.

6. Réservoir à cinq couches selon la revendication 5 dans lequel les couches extrêmes comprennent du PEHD vierge et un mélange de PEHD de liant et de PA ou d'EVOH provenant de chutes de fabrication et/ou de réservoirs recyclés.

7. Réservoir selon la revendication 5 ou 6 comprenant une sixième couche entre l'une des couches de liant et l'une des couches de PEHD, cette couche étant constituée d'un mélange de PEHD, de liant et de PA ou d'EVOH provenant de chutes de fabrication et/ou de réservoirs recyclés.

8. Réservoirs selon l'une quelconque des revendications 5 à 7 **caractérisés en ce qu'**ils passent le test de chute à 6 m à - 40° C, remplis d'un mélange eau-glycol à 8 bars.

## Patentansprüche

1. Bindemittel, enthaltend:
• eine Mischung (A) aus mindestens einem Polyethylen hoher Dichte (A1) und mindestens einem Polymer (A2), ausgewählt aus:
- Ethylen/Propylen-Elastomeren (EPR) oder Ethylen/Propylen/Dien-Elastomeren (EPDM),
- Polyethylenen sehr geringer Dichte (VLDPE), die Ethylenhomopolymere oder Ethylen/α-Olefin-Copolymere sind,
- Copolymeren des Ethylens mit mindestens einem Produkt, das ausgewählt ist aus (i) ungesättigten Carbonsäuren, ihren Salzen und Estern, (ii) Vinylestern gesättigter Carbonsäuren, (iii) ungesättigten Dicarbonsäuren, ihren Salzen, Estern, Halbestern und Anhydriden, wobei die Mischung aus (A1) und (A2) mit einem Monomer cogepfropft sind, das ausgewählt ist aus einer Säure oder einem Anhydrid einer ungesättigten Carbonsäure oder deren Derivaten,
• gegebenenfalls (ii) eine weitere Mischung (A') von cogepfropften Polymeren (A'1) und (A'2) und/oder einem Polymer (B),
• wobei das Bindemittel ein MI₁₀/MI₂-Verhältnis von mehr als 18,5 aufweist, wobei MI₁₀ den Fließindex bei 190 °C unter einer Last von 10 kg und MI₂ den Index unter einer Last von 2,16 kg bezeichnen.

2. Bindemittel nach Anspruch 1, bei dem das MI₁₀/MI₂-Verhältnis kleiner oder gleich 35 ist.

3. Bindemittel nach einem der vorhergehenden Ansprüche, bei dem der Wert für MI₂₀ für die Mischung (A) aus den cogepfropften Polymeren (A1) und (A2) kleiner als 24 ist, wobei MI₂₀ den Fließindex bei 190 °C unter einer Last von 21,6 kg bezeichnet.

4. Mehrschichtiges Material, enthaltend mindestens zwei Schichten, wobei das Bindemittel nach den Ansprüchen 1 bis 3 dazwischen angeordnet ist.

5. Behälter oder Tank, enthaltend fünf Schichten, bei denen es sich um
- PEHD,
- das Bindemittel nach den Ansprüchen 1 bis 3,
- einem PA oder einem EVOH,
- dem Bindemittel nach den Ansprüchen 1 bis 3 und
- PEHD
handelt.

6. Behälter oder Tank mit fünf Schichten nach Anspruch 5, bei dem die äußeren Schichten Roh-PEHD und eine Mischung aus PEHD, Bindemittel und PA oder EVOH aus Herstellungsabfällen und/oder recyclierten Behältern oder Tanks umfassen.

7. Behälter oder Tank nach Anspruch 5 oder 6, enthaltend eine sechste Schicht zwischen einer der Bindemittelschichten und einer der PEHD-Schichten, wobei diese Schicht aus einer Mischung aus PEHD, Bindemittel und PA oder EVOH aus Herstellungsabfällen und/oder recyclierten Behältern oder Tanks besteht.

8. Behälter oder Tanks nach einem der Ansprüche 5 bis 7, **dadurch gekennzeichnet, daß** sie, gefüllt mit einer Wasser/Glykoi-Mischung mit 8 bar, den Falltest (Sturztest) aus 6 m bei -40 °C bestehen.

## Claims

1. Binder including:
• a mixture (A) of at least one high density polyethylene (A1) and of at least one polymer (A2) selected from:
- ethylene/propylene (EPR) or ethylene/propylene/diene (EPDM) elastomers,
- very low density polyethylenes (VLDPE) which are homopolymers of ethylene or copolymers of ethylene and an alpha-olefin,
- copolymers of ethylene with at least one product selected from (i) unsaturated carboxylic acids, their salts, their esters, (ii) vinyl esters of saturated carboxylic acids, (iii) unsaturated dicarboxylic acids, their salts, their esters, their hemiesters, their anhydrides, the mixture of (A1) and (A2) being cografted with a monomer selected from an unsaturated carboxylic acid or anhydride or derivatives thereof,
• optionally another mixture (A') of cografted polymers (A'1) and (A'2) and/or a polymer
• the binder having an MI₁₀/MI₂ ratio higher than 18.5; MI₁₀ denoting the melt index at 190°C under a 10 kg load and MI₂ the index under a 2.16 kg load.

2. Binder according to Claim 1, in which the ratio MI₁₀/MI₂ is less than or equal to 35.

3. Binder according to any one of the preceding claims, in which the MI₂₀ of the mixture (A) of the cografted polymers (A1) and (A2) is lower than 24, MI₂₀ denoting the melt index at 190°C under a 21.6 kg load.

4. Multilayer material-including at least two layers, the binder of Claims 1 to 3 being placed between them.

5. Storage tank including five layers which are, respectively:
- HDPE
- the binder of Claims 1 to 3
- a PA or an EVOH
- the binder of Claims 1 to 3
- HDPE.

6. Storage tank with five layers according to Claim 5, in which the outermost layers include virgin HDPE and a mixture of HDPE, of binder and of PA or of EVOH originating from manufacture scrap and/or from recycled storage tanks.

7. Storage tank according to Claim 5 or 6, including a sixth layer between one of the binder layers and one of the HDPE layers, this layer consisting of a mixture of HDPE, of binder and of PA or of EVOH originating from manufacture scrap and/or from recycled storage tanks.

8. Storage tanks according to any one of Claims 5 to 7, **characterized in that** they pass the drop test at 6 m at -40°C, when filled with a water-glycol mixture at 8 bar.
